# EUROPEAN PATENT APPLICATION

(11) **EP 1 179 404 A1**
(43) Date of publication of application: **13.02.2002**
(21) Application number: 01306644.4
(22) Date of filing: 02.08.2001
(51) Int. Cl.: B29C 45/16, B29C 45/14

(54) **Apparatus for and method of injection-molding a body of synthetic resin**

(30) Priority: 02.08.2000 JP 2000269366
(71) Applicant: Ikuyo Co., Ltd, Tokyo 150-0002 (JP)
(72) Inventor: Sekiguchi, Tsuyoshi, Handa-shi, Aichi 475-0021 (JP); Imoto, Minoru, Handa-shi, Aichi 475-0032 (JP)
(74) Representative: Fenlon, Christine Lesley

(57) **Abstract**

An injection molding method includes a holding step, a cavity forming step, a first injection step, a compression molding step, and a second injection step. In the holding step, a skin layer (s) is held under tension by tension pins (p). In the cavity forming step, a male mold (1) and a female mold (2) are disposed in facing relation to each other, forming a molding cavity therebetween with a gap between the male and female molds being grater than the thickness of a door trim (body of synthetic resin) by a predetermined distance (d). In the first injection step, a molten synthetic resin is injected from a first injection gate (11) into the molding cavity. In the compression molding step, the male mold and the female mold are displaced toward each other by the pre-determined distance (d), compression-molding an upper portion (first portion) of the door trim of the molten synthetic resin. In the second injection step, the molten synthetic resin is injected from a second injection gate (12) into the molding cavity, injection-molding a lower portion (second portion) of the door trim of the molten synthetic resin.

## Description

The present invention relates to an apparatus for and a method of injection-molding a body of synthetic resin which has a first portion covered with a skin layer and a second portion contiguous to the first portion and not covered with a skin layer.

Generally, door trims comprise an upper portion of synthetic resin covered with a skin layer such as of fabric, synthetic leather or the like, a lower portion contiguous to a lower part of the upper portion, and an ornamental portion. Heretofore, the upper portion, the lower portion, and the ornamental portion which are separately molded are assembled by being joined together by screws, and the skin layer is bonded to the upper portion, thus producing the door trim.

However, the conventional assembling and bonding process is complex and time-consuming. The skin layer bonded to the upper portion tends to wrinkle easily.

Japanese laid-open patent publications Nos. 8-118412 and 10-138281 disclose methods of injection-molding a door trim with injection molding molds. According to the disclosed methods, a skin layer is placed in a cavity defined between a female mold and a male mold which confront each other at a spaced interval. A synthetic resin is injected from a gate into the cavity to simultaneously mold an upper portion, a lower portion, and an ornamental portion, and the skin layer is thermally fused to the surface of the upper portion. The disclosed methods are free of complexities involved in the conventional assembling and bonding process, and capable of quickly injection-molding door trims.

With the disclosed methods, however, when the skin layer is thermally fused to the upper portion, the skin layer is liable to flex and wrinkle, and tends to be damaged by the heat or pressure of the molten synthetic resin which is injected into the cavity. Specifically, the skin layer may be softened with the heat. If the skin layer has a fur-like surface, then its fibers tend to fall, impairing the appearance and gorgeous look of the fur-like surface, and the portion of the skin layer that is positioned near the gate is liable to have pits and ruptures. Furthermore, if the skin layer has a foamed polypropylene layer on its back, then since the molten synthetic resin which is injected from the gate flows at a high speed in the cavity, it tends to break the foamed polypropylene layer on the back of the skin layer. When the foamed polypropylene layer is broken, the face of the skin layer is peeled off the foamed polypropylene layer, leaving the foamed polypropylene layer exposed on the surface of the upper portion, which makes the door trim unsightly in appearance.

It is therefore advantageous for the present invention to provide an apparatus for and a method of injection-molding a body of synthetic resin with injection molding molds while preventing damage to a skin layer.

According to one aspect of the present invention there is provided an apparatus for injection-molding a body of synthetic resin which has a first portion covered with a skin layer and a second portion contiguous to the first portion and not covered with a skin layer, the apparatus comprising a male mold having a first injection member and a second injection member which are positioned for molding the first and second portions, respectively, of the body of synthetic resin, for injecting a molten synthetic resin, a female mold disposed in facing relation to the male mold and spaced therefrom, providing a molding cavity complementary in shape to the body of synthetic resin, holding means for holding the skin layer under tension in the molding cavity between the male mold and the female mold in a region in the molding cavity for molding the first portion of the body of synthetic resin, first injection means for injecting the molten synthetic resin from the first injection member into the molding cavity while the skin layer is being held under tension by the holding means and the male mold and the female mold are being positioned in facing relation to each other and spaced from each other with a gap across the molding cavity being greater than a thickness of the body of synthetic resin by a predetermined distance, actuating means for actuating the male mold or the female mold to displace the male mold and the female mold toward each other by the predetermined distance after the molten synthetic resin is injected from the first injection member by the first injection means, and second injection means for injecting the molten synthetic resin from the second injection member into the molding cavity when the molten synthetic resin injected from the first injection member into the molding cavity flows across the second injection member into a region for molding the second portion when the male mold or the female mold is actuated by the actuating means.

According to a second aspect of the present invention there is provided a method of injection-molding a body of synthetic resin which has a first portion covered with a skin layer and a second portion contiguous to the first portion and not covered with a skin layer, comprising the steps of holding the skin layer under tension in alignment with the first portion of the body of synthetic resin between a male mold and a female mold, the male mold having a first injection member and a second injection member which are positioned for molding the first and second portions, respectively, of the body of synthetic resin, for injecting a molten synthetic resin, forming a molding cavity between the male mold and the female mold by positioning the male mold and the female mold in facing relation to each other, the molding cavity being complementary in shape to the body of synthetic resin and providing a gap which is greater than a thickness of the body of synthetic resin by a predetermined distance, injecting a molten synthetic resin from the first injection member into the molding cavity, displacing the male mold and the female mold toward each other by the predetermined distance to compression-mold the first portion of the body of synthetic resin of the molten synthetic resin injected from the first injection member, and injecting the molten synthetic resin from the second injection member into the molding cavity when the molten synthetic resin injected from the first injection member flows across the second injection member.

When the molten synthetic resin injected from the first injection member reaches the skin layer, the skin layer is held under tension. The skin layer is thus prevented from flexing and wrinkling upon contact with the molten synthetic resin.

After the molten synthetic resin has been injected from the first injection member, the male mold and the female mold are advantageously displaced toward each other by the pre determined distance from the positions where the gap across the molding cavity is preferably greater than the thickness of the body of synthetic resin by the predetermined distance. The molten synthetic resin injected from the first injection member flows as a whole into the region for molding the first portion of the body of synthetic resin in the molding cavity. Therefore, it is not necessary to increase the pressure of the molten synthetic resin injected from the first injection member in order to cause the molten synthetic resin to flow as a whole into the region for molding the first portion of the body of synthetic resin in the molding cavity. Since the pressure of the molten synthetic resin injected from the first injection member may be relatively low, the skin layer is advantageously prevented from wrinkling and being damaged upon contact with the molten synthetic resin.

When the molten synthetic resin injected from the first injection member flows across the second injection member upon displacement of the male and female molds toward each other, the molten synthetic resin is preferably injected from the second injection member into the molding cavity. Since the molten synthetic resin injected from the second injection member is advantageously prevented from flowing into the region for molding the first portion of the body of synthetic resin in the molding cavity, the skin layer is prevented from wrinkling and being damaged.

The molten synthetic resin injected from the first injection member and flowing from the region for molding the first portion of the body of synthetic resin into the region for molding the second portion of the body of synthetic resin, and the molten synthetic resin injected from the second injection member are preferably allowed to blend together. The second portion of the body of synthetic resin which is not covered with the skin layer may therefore be prevented from suffering appearance defects including weld lines and silver streaks.

It has been found by the inventor that when the skin layer held under tension suffers a wrinkle in a rare instance, such a wrinkle is prevented from occurring on the skin layer held in a next holding cycle by tensioning the skin layer in the direction in which the wrinkle extends.

In the above apparatus, the holding means preferably comprises means for, if the skin layer of the body injection-molded of synthetic resin in a preceding molding cycle has a wrinkle, tensioning the skin layer of the body injection-molded of synthetic resin in a present molding cycle in the direction in which the wrinkle extends, and holding the skin layer.

The above method preferably further comprises the steps of inspecting the skin layer for a wrinkle thereon, and if a wrinkle is found on the skin layer, tensioning the skin layer held in a next holding cycle in a direction in which the wrinkle extends.

Therefore, the skin layer is reliably prevented from wrinkling when the body is injection-molded of synthetic resin.

Preferably, the male mold and the female mold have a plurality of screw holes and a plurality of pin holes paired with the screw holes, defined in surfaces of peripheral edges thereof which confront each other, the holding means comprising tension pins threaded in the screw holes for piercing the skin layer to holder the skin layer under tension, the tension pins being fittable in the pin holes when the male mold or the female mold is actuated by the actuating means to displace the male mold and the female mold toward each other.

The direction in which the skin layer is tensioned can easily be changed by selecting desired ones of the screw holes in which to receive the tension pins.

The molding cavity defined between the male mold and the female mold has undulated surface regions between the region for molding the first portion and the region for molding the second portion.

When the molten synthetic resin is to flow from the region for molding the first portion into the portion for molding the second portion in the molding cavity, it is necessary to inject the molten synthetic resin under a high pressure from the first injection member in order to overcome an obstacle presented by the undulated surface regions in the molding cavity. However, the high pressure possibly tends to cause wrinkles on and damage to the skin layer. According to embodiments of the present invention, as described above, the molten synthetic resin is injected from the first injection member while the male and female molds are being widely spaced from each other by the gap which is greater than the thickness of the body of synthetic resin by the predetermined distance. Thereafter, the male and female molds are displaced toward each other. Inasmuch as the displacement of the male and female molds toward each other compresses the molten synthetic resin to flow smoothly in the molding cavity, the molten synthetic resin can smoothly flows from the region for molding the first portion into the region for molding the second portion. Consequently, the body of synthetic resin which has undulations between the first portion and the second portion can be injection-molded without wrinkles on and damage to the skin layer.

For a better understanding of the present invention and to show how the same may be carried into effect, reference will now be made, by way of example, to the accompanying drawings, in which:
FIG. 1(a) is a plan view of a male mold of an injection molding apparatus according to embodiments of the present invention;
FIG. 1(b) is a cross-sectional view taken along line I(b) - I(b) of FIG. 1(a);
FIG. 2(a) is a plan view of a female mold of the injection molding apparatus according to ― embodiments of the present invention;
FIG. 2(b) is a cross-sectional view taken along line II(b) - II(b) of FIG. 2(a);
FIG. 3 is a view, partly in block form, of the injection molding apparatus according to embodiments of the present invention;
FIG. 4 is a flowchart of an injection molding method according to embodiments of the present invention;
FIGS. 5(a) through 5(d) are cross-sectional views showing successive steps of the injection molding method according to embodiments of the present invention; and
FIG. 6(a) is a plan view of a body injection-molded of synthetic resin according to embodiments of the present invention; and
FIG. 6(b) is a cross-sectional view taken along line VI(b) - VI(b) of FIG. 6(a).

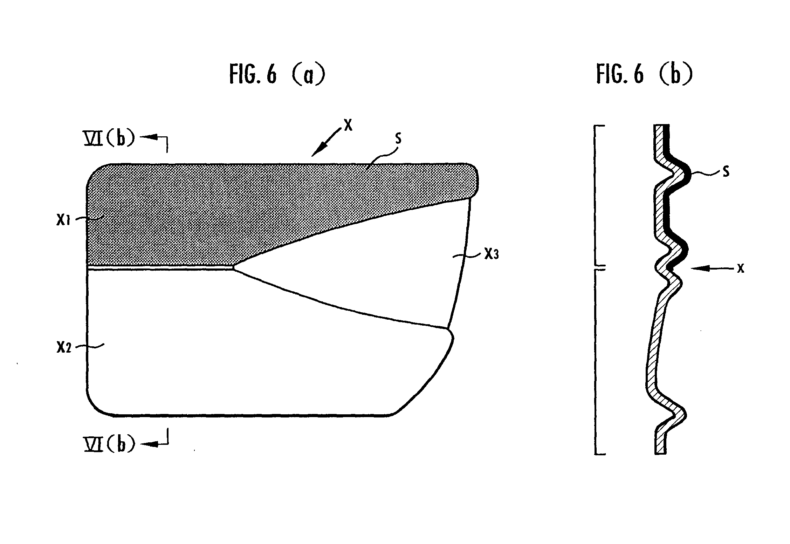

Figure 6(a) shows an injection molding apparatus and an injection molding method injection-mold a door trim (body) x of a synthetic resin.

The door trim x comprises an upper portion (first portion) x₁ covered with a skin layer s, a lower portion (second portion) x₂ contiguous to the upper portion x₁ and not covered with the skin layer s, and an ornamental portion x₃. As shown in FIG. 6(b), the upper portion x₁ and the lower portion x₂ are joined to each other by a junction having a complex shape (described later on) represented by undulations. The skin layer s may be of any of various types including a surface layer of fabric and a foamed layer of polypropylene laminated on the back of the surface layer, a surface layer of any of various soft vinyl chlorides or olefinic elastomer, a surface layer with fibers mounted thereon, etc. The surface layer and the formed layer on the back thereof are made of materials that are selected in view of the configuration of the final product and the manufacturing cost thereof.

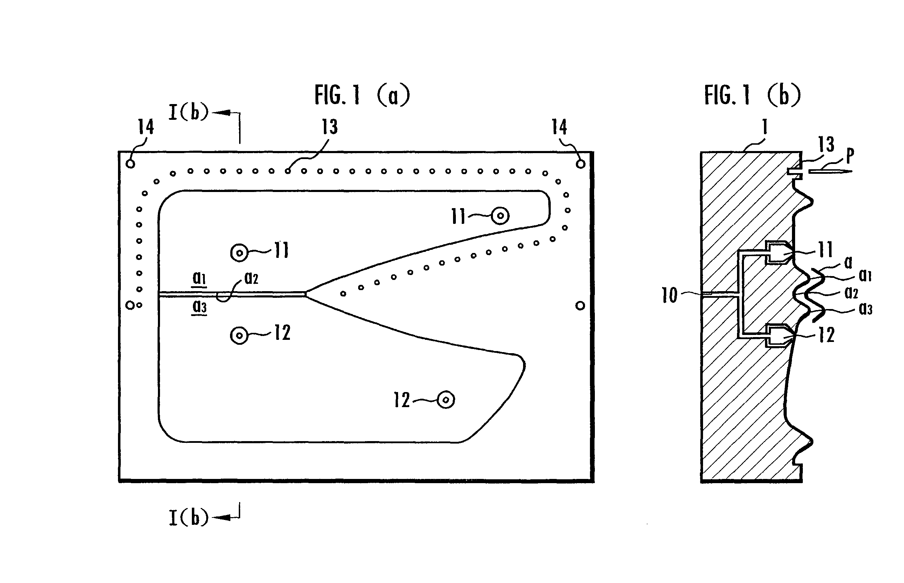

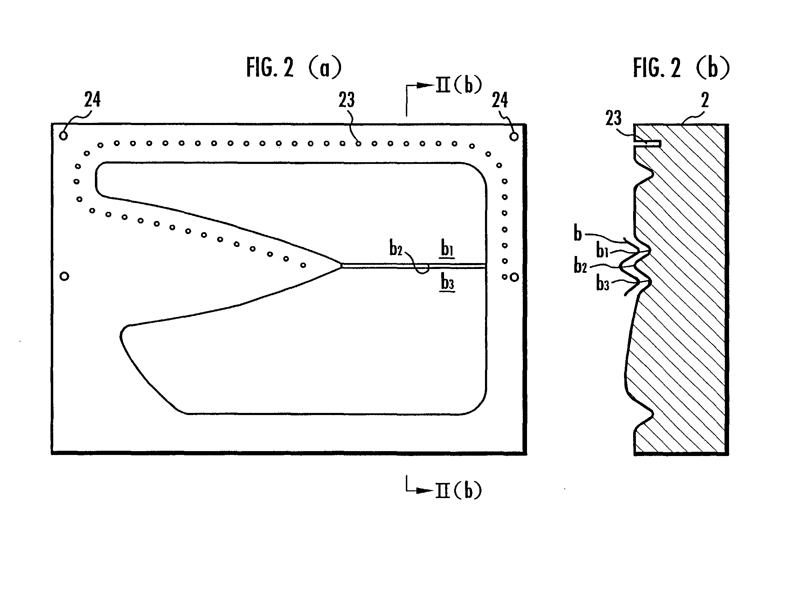

The injection molding apparatus according to embodiments of the present invention comprises a male mold 1 shown in FIGS. 1(a) and 1(b) and a female mold 2 shown in FIGS. 2(a) and 2(b).

The male mold 1 will first be described in detail below with reference to FIGS. 1(a) and 1(b). The male mold 1 has a first injection gate 11 and a second injection gate 12 which communicate with a liner 10, a plurality of screw holes 13 defined at spaced intervals around a region for molding the upper portion x₁, the screw holes 13 being capable of receiving tension pins p threaded therein, and a plurality of fitting holes 14 defined at respective four corners of an upper half portion of the male mold 1. The screw holes 13 are defined in a surface of peripheral edges of the male mold 1 which confronting the female mold 2.
The male mold 1 also has an undulated or bent surface region a disposed near a position where the upper portion x₁ and the lower portion x₂ are joined to each other. The undulated surface region a comprises a ridge a₁, a groove a₂, and a ridge a₃ that are arranged successively in the downward direction in FIGS. 1(a) and 1(b). As described later on, the first injection gate 11 and the second injection gate 12 injects a synthetic resin for forming the upper portion x₁ and the lower portion x₂, respectively. The tension pins p make up a holding means for holding the skin layer s while keeping the skin layer s under tension.

The female mold 2 will first be described in detail below with reference to FIGS. 2(a) and 2(b). The female mold 2 has a plurality of pin holes 23 defined in alignment with the respective screw holes 13 in the male mold 1 for receiving the tension pins p that are threaded in the screw holes 13, and a plurality of positioning pins 24 defined in alignment with the respective fitting holes 14 in the male mold 1 for fitting in the fitting holes 14 to position the male and female molds 1, 2. The pin holes 23 are defined in a surface of peripheral edges of the female mold 2 which confronting the male mold 1. The female mold 2 has an undulated or bent surface region b aligned with the undulated surface region a of the male mold 1, the undulated surface region b comprises a groove b₁, a ridge b₂, and a groove b3 that are arranged successively in the downward direction in FIGS. 2(a) and 2(b).

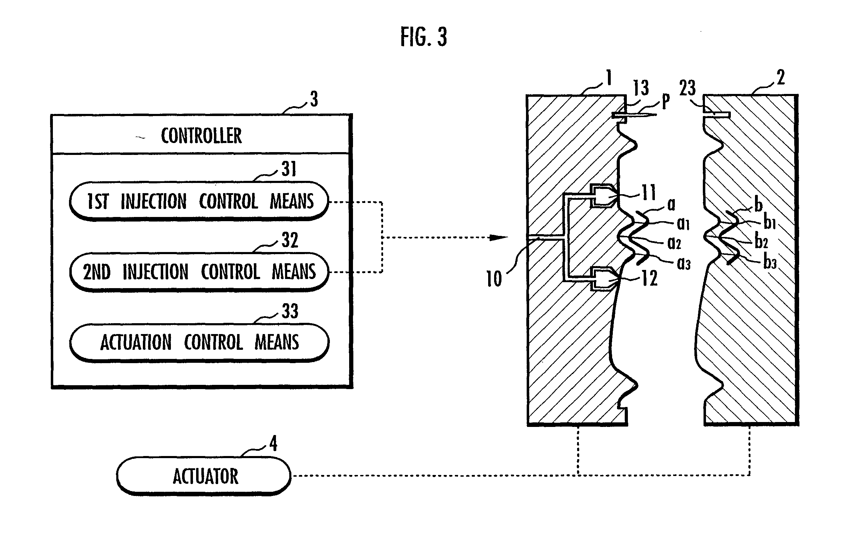

As shown in FIG. 3, the injection molding apparatus further comprises a controller 3 for controlling overall operation of the injection molding apparatus and an actuator (actuating means) 4 for actuating the male and female molds 1, 2.

The controller 3 comprises a first injection control means 31 for controlling the injection of a molten synthetic resin from the first injection gate 11, a second injection control means 32 for controlling the injection of a molten synthetic resin from the second injection gate 12, and an actuation control means 33 for controlling the actuation of the male and female molds 1, 2 with the actuator 4.

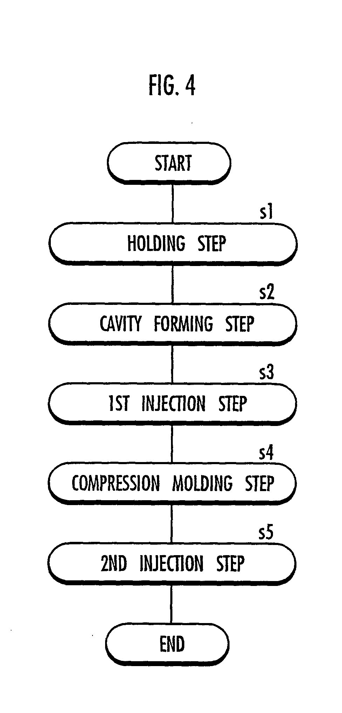

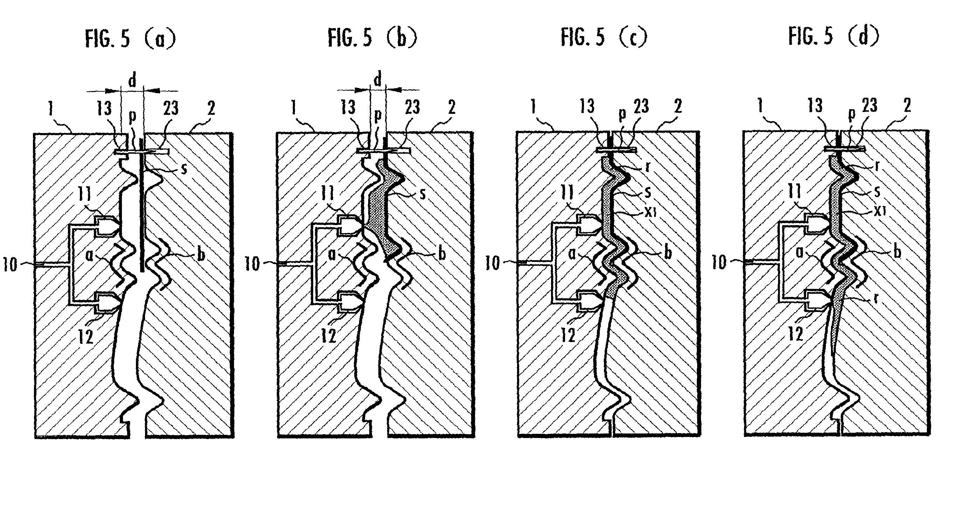

The injection molding method which is carried out by the above injection molding apparatus for injection-molding the door trim x will be described below with reference to FIGS. 4 and 5(a) through 5(d). As shown in FIG. 4, the injection molding method comprises a holding step s1, a cavity forming step s2, a first injection step s3, a compression molding step s4, and a second injection step s5.

In the holding step s1, as shown in FIG. 5(a), the skin layer s has its peripheral edges pierced by the tension pins p threaded in the screw holes 13 in the male mold 1. In the holding step s1, as shown in FIG. 5(a), the male and female molds 1, 2 are positioned in facing relation to each other with a molding cavity defined therebetween. The skin layer s is positioned and held in the region for molding the upper portion x₁ between the male and female molds 1, 2 while being kept under tension by the tension pins p. The relative positions of the male and female molds 1, 2 are adjusted by the actuator 4 controlled by the actuation control means 3 such that the gap provided across the molding cavity between the male and female molds 1, 2 is greater than the thickness of the door trim x as a final product by a given distance d. The distance d is set to a value ranging from 6 mm to 20 mm. If the distance d were smaller than 6 mm, then the skin layer s would be more likely to wrinkle or be damaged by the pressure under which a molten synthetic resin r (see FIG. 5(b)) is injected from the first injection gate 11. If the distance d were greater than 20 mm, then it would take an extra time to move the male and female molds 1, 2 toward each other in the compression molding step s4 (described later on) and the molten synthetic resin r would be cooled during that time and would be less flowable due to the increased viscosity.

In the first injection step s3, as shown in FIG. 5(b), the first injection control means 31 injects the molten synthetic resin r from the first injection gate 11 into the molding cavity. The amount of the molten synthetic resin r injected into the molding cavity is controlled to be greater than an amount required to mold the upper portion x₁ by an increase ranging 3 through 10 %. If the increase were less than 3 %, then an appearance defect such as a weld line would highly possibly occur at the junction between the upper portion x₁ and the lower portion x₂. If the increase exceeded 10 %, then it would be highly likely for the skin layer s to be damaged due to excessive heat transferred from the molten synthetic resin r because of the increased heat capacity thereof caused by the increased volume thereof.

In the compression molding step s4, the actuation control means 33 controls the actuator 4 to move the male and female molds 1, 2 toward each other by the distance d, as shown in FIG. 5(c). The molten synthetic resin r injected from the first injection gate 11 passes across the undulated surface regions a, b and flows into a region for molding the lower portion x₂. The gap across the molding cavity now becomes substantially the same as the final thickness of the door trim x, compression-molding the upper portion x₁. At this time, the male and female molds 1, 2 are displaced toward each other at a speed ranging from 0.3 m/min. to 1.0 m/min. If the speed were lower than 0.3 m/min., then the molten synthetic resin r would have its viscosity unduly lowered and would be less flowable due to a reduction in its temperature during the displacement of the male and female molds 1, 2 toward each other. If the speed were higher than 1,0 m/min., then the flexibility and shock resistance of the door trim x would be apt to be unduly lowered.

In the second injection step s5, when the molten synthetic resin r injected from the first injection gate 11 passes across the second injection gate 12, the second injection control means 32 injects the molten synthetic resin r from the second injection gate 12, molding the lower portion x₂.

After the molten synthetic resin r has been cooled and solidified, the male and female modes 1, 2 are moved away from each other by the actuation control means 33, and the door trim x is removed from between the male and female modes 1, 2.

The injection molding apparatus and the injection molding method according to the present invention may offer the following advantages: When the molten synthetic resin r injected from the first injection gate 11 reaches the skin layer s, the skin layer s has its peripheral edges pierced by the tension pins p and held under tension (see FIG. 5(a)). The skin layer s is thus prevented from flexing, wrinkling, and suffering pits and ruptures upon contact with the molten synthetic resin r. The direction in which the skin layer s is tensioned can easily be changed by selecting desired ones of the screw holes 13 in which to receive the tension pins p.

After the molten synthetic resin r has been injected from the first injection gate 11, the male and female molds 1, 2 are moved toward each other by the distance d from the respective positions where the gap across the molding cavity is greater than the thickness of the door trim x by the distance d. When the male and female molds 1, 2 are moved toward each other, the molten synthetic resin r injected from the first injection gate 11 is compressed and flows from the region for molding the upper portion x₁ in the molding cavity across the undulated surface regions a, b into the region for molding the lower portion x₂ in the molding cavity. Therefore, the molten synthetic resin r does not need to be injected from the first injection gate 11 under a high pressure. Because of a relatively low pressure of the molten synthetic resin r injected from the first injection gate 11, the skin layer s is prevented from wrinkling, suffering pits and ruptures, or being damaged upon contact with the molten synthetic resin r. The door trim x having an undulated or bent region between the upper portion x₁ and the lower portion x₂ can thus easily be molded while being protected against wrinkles, pits, ruptures, and damage on the skin layer s (see FIG. 6(b)). Since the upper portion x₁ and the lower portion x₂ are integrally fabricated, the door trim x can be manufactured with less labor and higher efficiency than if the upper portion x₁, the lower portion x₂, and the ornamental portion x₃ were separately molded and assembled together.

Even if the surface layer of the skin layer s is made of a thermoplastic synthetic resin such as soft vinyl chloride or olefinic elastomer, the surface layer is prevented from being damaged by the heat and pressure of the molten synthetic resin r. Even if the surface layer of the skin layer s is made of a fur-like material, its fibers are prevented from falling and losing resilience due to the heat and pressure of the molten synthetic resin r, and hence the appearance and gorgeous look of the fur-like surface layer are prevented from being impaired. Even if the skin layer s comprises a surface layer made of fabric and a layer of polypropylene foam or urethane foam laminated on the back of the surface layer, the skin layer s is prevented from wrinkling and being damaged. Since urethane foam is more meltable than polypropylene foam, it is necessary to pay careful attention to the temperature of the molten synthetic resin r in order to prevent the foamed layer from being appreciably reduced. Even if the surface layer of soft vinyl chloride of the skin layer s is embossed, or the skin layer s is cut or blanked from a sheet, or the skin layer s is pre-shaped to a complex configuration by a vacuum molding process, the skin layer s is prevented from wrinkling and being damaged.

When the molten synthetic resin r injected from the first injection gate 11 flows across the second injection gate 12 upon displacement of the male and female molds 1, 2 toward each other, the molten synthetic resin r is injected from the second injection gate 12 (see FIG. 5(d)). Therefore, the molten synthetic resin r injected from the second injection gate 12 is prevented from flowing into the region for molding the upper portion x₁ in the molding cavity, the skin layer s is prevented from having wrinkles, pits, and damage due to contact with the molten synthetic resin r.

The molten synthetic resin r injected from the first injection gate 11 and flowing from the region for molding the upper portion x₁ into the region for molding the lower portion x₂ in the molding cavity, and the molten synthetic resin r injected from the second injection gate 12 are allowed to blend together (see FIG. 5(d)). The lower portion x₂ which is not covered with the skin layer s is prevented from suffering appearance defects including weld lines and silver streaks.

From the standpoint of increasing the quality of the door trim x, the skin layer s may be inspected for a wrinkle thereon (inspection step), and, if a wrinkle is found on the skin layer s in the inspection step, the skin layer s may be tensioned in the direction in which the wrinkle extends when the skin layer s is held in the holding step s1 shown in FIG. 4 in a next molding cycle.

With the injection molding apparatus and the injection molding method according to the present invention, it is highly rare for the skin layer s to have wrinkles. However, in the event that the skin layer s happens to have a wrinkle, the skin layer s is tensioned in the direction in which the wrinkle extends in a subsequent molding cycle. Therefore, the skin layers s of door trims x that are subsequently injection-molded are prevented from having such a wrinkle. As described above, the direction in which the skin layer s is tensioned can easily be changed by selecting desired ones of the screw holes 13 in which to receive the tension pins p.

Although a certain preferred embodiment of the present invention has been shown and described in detail, it should be understood that various changes and modifications may be made therein without departing from the scope of the appended claims.

## Claims

1. An apparatus for injection-molding a body of synthetic resin which has a first portion covered with a skin layer and a second portion contiguous to the first portion and not covered with a skin layer, the apparatus comprising:
a male mold having a first injection member and a second injection member which serve to inject a molten synthetic resin and are positioned for molding the first and second portions, respectively, of the body of synthetic resin;
a female mold disposed, in use, in facing relation to said male mold and spaced therefrom, thereby providing a molding cavity substantially complementary in shape to the body of synthetic resin;
holding means for holding the skin layer under tension in said molding cavity between said male mold and said female mold such that the skin layer is held in a region in said molding cavity for molding the first portion of the body of synthetic resin;
first injection means for injecting the molten synthetic resin from said first injection member into said molding cavity while the skin layer is being held under tension by said holding means and said male mold and said female mold are positioned in a facing relation to each other and are spaced from each other to form a molding cavity with a gap which is greater than the thickness of the body of synthetic resin by a predetermined distance;
actuating means for actuating said male mold or said female mold to displace said male mold and said female mold toward each other by said predetermined distance after the molten synthetic resin is injected from said first injection member by said first injection means; and
second injection means for injecting the molten synthetic resin from said second injection member into said molding cavity when the molten synthetic resin injected from said first injection member into said molding cavity flows across said second injection member into a region for molding said second portion when said male mold or said female mold is actuated by said actuating means.

2. An apparatus according to claim 1, wherein said holding means comprises means for, if the skin layer of the body injection-molded of synthetic resin in a preceding molding cycle has a wrinkle, tensioning the skin layer of the body injection-molded of synthetic resin in a present molding cycle in the direction in which said wrinkle extends, and holding the skin layer.

3. An apparatus according to claim 1 or 2, wherein said male mold and said female mold have a plurality of screw holes and a plurality of pin holes paired with said screw holes, defined in surfaces of peripheral edges thereof which confront each other, said holding means comprising tension pins threaded in said screw holes for piercing said skin layer to holder the skin layer under tension, said tension pins being fittable in said pin holes when said male mold or said female mold is actuated by said actuating means to displace said male mold and said female mold toward each other.

4. An apparatus according to claim 1 or 2, wherein said molding cavity defined between said male mold and said female mold has undulated surface regions between the region for molding said first portion and said region for molding said second portion.

5. A method of injection-molding a body of synthetic resin which has a first portion covered with a skin layer and a second portion contiguous to the first portion and not covered with a skin layer, the method comprising the steps of:
holding the skin layer under tension in alignment with the first portion of the body of synthetic resin between a male mold and a female mold, said male mold having a first injection member and a second injection member which serve to inject a molten synthetic resin and are positioned for molding the first and second portions, respectively, of the body of synthetic resin;
forming a molding cavity between said male mold and said female mold by positioning said male mold and said female mold in a facing relation to each other, said molding cavity being substantially complementary in shape to the body of synthetic resin and providing a gap which is greater than a thickness of the body of synthetic resin by a predetermined distance;
injecting a molten synthetic resin from said first injection member into said molding cavity;
displacing said male mold and said female mold toward each other by said predetermined distance to compression-mold the first portion of the body of synthetic resin of the molten synthetic resin injected from said first injection member; and
injecting the molten synthetic resin from said second injection member into said molding cavity when the molten synthetic resin injected from said first injection member flows across said second injection member.

6. A method according to claim 5, further comprising the steps of:
inspecting said skin layer for a wrinkle thereon; and
if a wrinkle is found on said skin layer, tensioning the skin layer held in a next holding cycle in a direction in which said wrinkle extends.
